(19) **Europäisches Patentamt / European Patent Office / Office européen des brevets**

(11) **EP 4 464 455 A1**

(12) **EUROPEAN PATENT APPLICATION**
published in accordance with Art. 153(4) EPC

(43) Date of publication:
**20.11.2024 Bulletin 2024/47**

(21) Application number: **23749555.1**

(22) Date of filing: **20.01.2023**

(51) International Patent Classification (IPC):
***B23K 35/30*** *(2006.01)*      ***B23K 9/16*** *(2006.01)*
***B23K 9/173*** *(2006.01)*

(52) Cooperative Patent Classification (CPC):
**B23K 9/16; B23K 9/173; B23K 35/30**

(86) International application number:
**PCT/JP2023/001744**

(87) International publication number:
**WO 2023/149239 (10.08.2023 Gazette 2023/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.02.2022 JP 2022016059**

(71) Applicant: **JFE Steel Corporation**
**Tokyo 100-0011 (JP)**

(72) Inventors:
• **NAGAO, Ryota**
  **Tokyo 100-0011 (JP)**
• **KOZUKI, Shohei**
  **Tokyo 100-0011 (JP)**
• **OKABE, Takatoshi**
  **Tokyo 100-0011 (JP)**

(74) Representative: **Haseltine Lake Kempner LLP**
**One Portwall Square**
**Portwall Lane**
**Bristol BS1 6BH (GB)**

(54) **STRAIGHT POLARITY MAG-WELDING WIRE AND STRAIGHT POLARITY MAG-WELDING METHOD USING SAME**

(57)      Provided is a straight polarity MAG-welding technology capable of not only reducing spatter generation, but also achieving an excellent bead shape when preforming MAG welding. The technology involves a welding wire for use in straight polarity MAG welding; this welding wire has a composition containing: , in mass%, C: 0.020 to 0.080%, Si: 0.50 to 0.97%, Mn:1.50 to 2.00%, P: 0.001 to 0.050%, S: 0.001 to 0.025%, Ti: 0.10 to 0.30%, Al: 0.010 to 0.050%, Cr: 0.05 to 0.20%, Ni: 0.01 to 0.10%, Mo: 0.05 to 0.30%, Ca: 0.0016% or less, REM: 0.020 to 0.055%, B: 0.0005 to 0.0030%, N: 0.0100% or less, and a balance consisting of Fe and inevitable impurities. If necessary, the composition may further contain at least one selected from, in mass%, Nb: 0.050% or less, V: 0.050% or less, Zr: 0.300% or less, and K: 0.0150% or less.

**EP 4 464 455 A1**

**Description**

Technical field

The present invention relates to a welding wire for use in MAG welding and a MAG-welding method using such welding wire; and particularly to a straight polarity MAG-welding wire which is a welding wire used as the negative pole and a straight polarity MAG-welding method using such welding wire.

Background art

The MAG welding method, which uses a mixed gas of an Ar gas and $CO_2$ gas as a shielding gas, is the most common welding method and is widely used for welding steel materials because it is a highly efficient welding method. Particularly, the method has become widely used in fields such as shipbuilding, construction, bridges, automobiles, and construction machinery. In the fields of shipbuilding, construction, and bridges, the method is used for high-current multilayer welding of thick steel plates, while in the fields of automobiles and construction machinery, the method is often used for fillet welding of thin steel plates.

Conventionally, a reverse polarity DC welding method has been used in MAG welding, in which a welding wire as a consumable electrode is used as the positive side (reverse pole). This method has been widely put to practical use because the arc is stable from low to high current range. This reverse polarity DC welding method is characterized by deep penetration of the steel plate due to a large heat effect on the steel plate side as the negative side, which makes the method suitable for use in multilayer welding of thick steel plates. However, if applying the reverse polarity DC welding method to fillet welding of thin steel plates, there is a problem that welding defects caused by burn-through are likely to occur due to the deep penetration of the steel plate that results from the large heat effect on the steel plate side. In fillet welding of thin steel plates, emphasis is put on the prevention of the welding defects caused by burn-through and on an improvement in welding speed; if applied to fillet welding of thin steel plates, the reverse polarity DC welding method still has the above problems.

In contrast, in the case of a straight polarity DC welding method using the welding wire as the negative side as opposed to the reverse polarity method, there are characteristics such as a shallower penetration of the steel plate due to a smaller heat effect on the steel plate, and a larger deposition amount due to a higher melting speed of the welding wire. However, the problem with the straight polarity DC welding method is that the arc is likely to be unstable due to the coarse molten droplets suspended at the tip of the welding wire, which causes spatters to be generated in a large amount. Further, in high-speed welding, there have also been problems such as humping of the weld bead and uneven bead shape.

In this regard, Patent Literature 1 discloses a method for reducing the spatter generation amount in straight polarity MAG welding by performing welding using a welding steel wire with REM (rare earth elements) added. However, in this technology, $CO_2$ is contained in the shielding gas in an amount of 60% by volume or more; the effect of suppressing spatter generation during welding is insufficient when using a shielding gas with a low $CO_2$ ratio.

Patent Literature 2 discloses a MAG welding method using a straight polarity MAG welding steel wire that is characterized in that rare earth elements (REM) are contained therein, and that a value D2 calculated by the following formula (1) based on the contents of Si, Mn, Ti, Zr, Al and Cr satisfies a range of 1.2 to 2.1.

$$D2 = ([Si]/2) + ([Mn]/3) + ([Ti] + [Zr] + [Al]) + ([Cr]/10) \ldots (1)$$

Here, [element] indicates the elemental content (% by mass) in the welding wire.

However, even with this technology, a sufficient spatter generation suppressing effect cannot be achieved when performing welding under high-voltage conditions.

Citation Lists

Patent Literature

Patent Literature 1: JP-A-2005-246386
Patent Literature 2: JP-A-2002-144081

Summary of Invention

Technical Problem

As described above, in straight polarity MAG welding using a mixed gas of an Ar gas and $CO_2$ gas as a shielding gas, there has been a problem that the arc is likely to become unstable even when performing straight polarity welding with the welding wire being used as the negative pole, resulting in an increased amount of spatters generated.

The present invention was made in view of such current situation, and it is an object of the present invention to provide a straight polarity MAG-welding wire (simply referred to as "welding wire" hereinafter) capable of not only reducing spatter generation, but also achieving an excellent bead shape when performing MAG welding; and a straight polarity MAG-welding method using such welding wire.

Solution to Problem

The inventors of the present invention diligently studied the impact of a wire composition on arc stability in straight polarity MAG welding. As a result, they arrived at the following findings.

(1) By containing an appropriate amount (specific amount) of rare earth elements (hereinafter referred to as "REM") in the welding wire, arc breakage in the low-voltage region is prevented, thereby enabling stable transfers of the molten droplets.

(2) By containing appropriate amounts (specific amounts) of Ti, Al, Cr, and Ca in the welding wire, the arc generation point can be further stabilized, and the surface tension of the molten droplets can be adjusted to a suitable range to stabilize the behavior of the molten droplets. As a result, the amount of the spatters generated can be significantly reduced.

(3) Further, by containing appropriate amounts (specific amounts) of Si, Mn, and S in the welding wire, a particularly stable weldability can be achieved.

The present invention was completed based on these findings and further studies. The overview of the present invention is as follows.

[1] A straight polarity MAG-welding wire for use in straight polarity MAG welding, having an ingredient composition including, in mass%, C: 0.020 to 0.080%, Si: 0.50 to 0.97%, Mn: 1.50 to 2.00%, P: 0.001 to 0.050%, S: 0.001 to 0.025%, Ti: 0.10 to 0.30%, Al: 0.010 to 0.050%, Cr: 0.05 to 0.20%, Ni: 0.01 to 0.10%, Mo: 0.05 to 0.30%, Ca: 0.0016% or less, REM: 0.020 to 0.055%, B: 0.0005 to 0.0030%, N: 0.0100% or less, and a balance consisting of Fe and inevitable impurities.

[2] The straight polarity MAG-welding wire according to [1], further containing at least one selected from, in mass%, Nb: 0.050% or less, V: 0.050% or less, Zr: 0.300% or less, and K: 0.0150% or less, in addition to the ingredient composition.

[3] The straight polarity MAG-welding wire according to [1] or [2], wherein the welding wire has, on a surface layer thereof, a Cu plating with an average thickness of 0.60 μm or larger.

[4] A straight polarity MAG-welding method in which the straight polarity MAG-welding wire according to any one of [1] to [3] is used to perform MAG welding using a shielding gas which is a mixed gas in which one or both of $CO_2$ and $O_2$ are present at 5 to 30% by volume and a balance is one or more of Ar, He and $H_2$.

Advantageous Effects of Invention

The straight polarity MAG-welding wire and straight polarity MAG-welding method of the present invention have an industrially exceptional effect where when performing straight polarity MAG welding, spatter generation can be reduced, and welding yielding an excellent bead shape can be performed stably.

Description of Embodiments

[Basic Composition Of Welding Wire]

Reasons for restricting the composition of the MAG welding wire of the present invention are described. Hereinafter, "%" in the composition means "% by mass" unless otherwise specified.

[C: 0.020 to 0.080%]

C is an important element for ensuring the strength of the weld metal and has the effect of improving the fluidity of the molten steel by reducing the viscosity thereof. This effect cannot be achieved when the C content is less than 0.020%. Meanwhile, when the C content is greater than 0.080%, not only will the behavior of the molten droplets and molten pool become unstable, but the toughness of the weld metal will also decrease. Therefore, C is limited to a range of 0.020 to 0.080%. A preferred range is 0.025 to 0.075%, and a more preferred range is 0.030 to 0.070%.

[Si: 0.50 to 0.97%]

Si has a deoxidation effect and is an essential element in terms of deoxidation of the weld metal. In addition, Si has the effect of suppressing arc spread in straight polarity welding and increasing the number of molten droplet transfers. This effect cannot be achieved when the Si content is less than 0.50%. Meanwhile, when the Si content is greater than 0.97%, the arc becomes unstable, and spatters increase. Therefore, the Si content needs to be in the range of 0.50 to 0.97%. A preferred range is 0.55 to 0.95%, and an even more preferred range is 0.60 to 0.90%.

[Mn: 1.50 to 2.00%]

Mn has a deoxidation effect as is the case with Si and is an essential element for deoxidizing the weld metal. When the Mn content is less than 1.50%, deoxidation is insufficient to cause blowhole defects in the weld metal. Meanwhile, when the Mn content is greater than 2.00%, the toughness of the weld metal will decrease. Thus, Mn needs to be in the range of 1.50 to 2.00%. A preferred range is 1.55 to 1.95%.

[P: 0.001 to 0.050%]

P is an element that has the effect of lowering the melting point of steel and improving the electrical resistivity thereof. Therefore, the arc is stabilized in straight polarity MAG welding due to an improved melting efficiency. This effect cannot be achieved when the P content is less than 0.001%. Meanwhile, when the P content is greater than 0.050%, in straight polarity MAG welding, the viscosity of the molten steel is reduced, and the arc becomes unstable, increasing the generation of small spatters. Further, there is a higher risk of causing high-temperature cracking in weld metal. Thus, P needs to be in the range of 0.001 to 0.050%. A preferred range is 0.002 to 0.030%.

[S: 0.001 to 0.025%]

S is an element that has the effect of stabilizing the arc in straight polarity MAG welding by reducing the viscosity of the molten steel and allowing the molten droplets suspended at the tip of the welding wire to be easily detached therefrom. S also has the effect of smoothing the bead and suppressing the burn-through of the upper plate by reducing the viscosity of the molten steel. This effect cannot be achieved when the S content is less than 0.001%. Meanwhile, when the S content is greater than 0.025%, small spatters increase, and the toughness of the weld metal decreases. Therefore, S needs to be in the range of 0.001 to 0.025%. A preferred range is 0.001 to 0.010%.

[Ti: 0.10 to 0.30%]

Ti is an element that has a deoxidation effect and improves the strength of the weld metal. This effect cannot be achieved when the Ti content is less than 0.10%. Meanwhile, when the Ti content is greater than 0.30%, coarse molten droplets will be formed, increasing the number of large spatters. Thus, the Ti content is limited to a range of 0.10 to 0.30%. A preferred range is 0.13 to 0.25%.

[Al: 0.010 to 0.050%]

Al is an element that improves the strength and toughness of the weld metal and enhances the arc stability. This effect cannot be achieved when the Al content is less than 0.010%. Meanwhile, when the Al content is greater than 0.050%, a decrease in the toughness of the weld metal will be incurred. Thus, the Al content is limited to a range of 0.010 to 0.050%. A preferred range is 0.017 to 0.040%.

[Cr: 0.05 to 0.20%]

Cr is an element that improves the strength and weather resistance of the weld metal. This effect cannot be achieved when the Cr content is less than 0.05%. Meanwhile, when the Cr content is greater than 0.20%, a decrease in the toughness of the weld metal will be incurred. Therefore, the Cr content is limited to a range of 0.05 to 0.20%. A preferred range is 0.07 to 0.15%, and an even more preferred range is 0.07 to 0.14%.

[Ni: 0.01 to 0.10%]

As is the case with Cr, Ni is also an element that improves the strength and weather resistance of the weld metal. This effect cannot be achieved when the Ni content is less than 0.01%. Meanwhile, when the Ni content is greater than 0.10%, a decrease in the toughness of the weld metal will be incurred. Thus, Ni is limited to a range of 0.01 to 0.10%. A preferred range is 0.01 to 0.08%, and an even more preferred range is 0.02 to 0.08%.

[Mo: 0.05 to 0.30%]

As are the cases with Cr and Ni, Mo is also an element that improves the strength and weather resistance of the weld metal. This effect cannot be achieved when the Mo content is less than 0.05%. Meanwhile, when the Mo content is greater than 0.30%, a decrease in the toughness of the weld metal will be incurred. Thus, the Mo content is limited to a range of 0.05 to 0.30%. A preferred range is 0.05 to 0.20%, and an even more preferred range is 0.05 to 0.17%.

[Ca: 0.0016% or less]

Ca is an impurity that is mixed into the molten steel during steelmaking and casting or is mixed into the steel wire during wire drawing. When the Ca content is greater than 0.0016%, stable spray transfer by REM addition cannot be realized. Therefore, the Ca content is limited to 0.0016% or less. Meanwhile, since reducing the Ca content to less than 0.0001% requires process control with an excess load, a preferred range is 0.0001 to 0.0008%.

[REM: 0.020 to 0.055%]

REM (Rare Earth Element) is an effective element for refining inclusions in the material of the welding wire during steelmaking and casting processes and for improving the toughness of the weld metal during welding construction. In particular, in straight polarity MAG welding, molten droplet transfer (spray transfer) in the low-voltage region can be stabilized. This effect cannot be achieved when the content of REM is less than 0.020%. Meanwhile, when the content of REM is greater than 0.055%, arc stabilization is hindered, reducing the melting speed of the welding wire and increasing a higher risk of burn-through when performing thin plate welding. Thus, the content of REM needs to satisfy a range of 0.020 to 0.055%. A preferred range is 0.025 to 0.055%.

[B: 0.0005 to 0.0030%]

B is also an element that improves the strength and weather resistance of the weld metal. This effect cannot be achieved when the B content is less than 0.0005%. Meanwhile, when the B content is greater than 0.0030%, a decrease in the toughness of the weld metal will be incurred. Therefore, the B content is limited to a range of 0.0005 to 0.0030%. A preferred range is 0.0010 to 0.0025% and an even more preferred range is 0.0016 to 0.0025%.

[N: 0.0100% or less]

N forms a nitride with Ti and Nb to refine the crystal grains in the weld. However, if the N content exceeds 0.0100%, the crack resistance, ductility, and toughness of the weld are likely to deteriorate. Therefore, the N content is limited to 0.0100% or less. A preferred range is 0.0020 to 0.0050%.

[Optionally selected composition]

The welding wire of the present invention has the abovementioned basic composition; in addition to such basic composition, the welding wire of the present invention may further contain, if necessary, at least one selected from Nb: 0.050% or less, V: 0.050% or less, Zr: 0.300% or less, and K: 0.0150% or less, as an optionally selected composition(s).

[Nb: 0.050% or less]

Nb is an element that improves the strength and toughness of the weld metal and improves arc stability. However, if Nb is added in an excessive amount, a decrease in the toughness of the weld metal will be incurred. Therefore, it is preferred that Nb be added by 0.050% or less.

[V: 0.050% or less]

As is the case with Nb, V is also an element that improves the strength and toughness of the weld metal and improves arc stability. However, if V is added in an excessive amount, a decrease in the toughness of the weld metal will be incurred. Therefore, it is preferred that V be added by 0.050% or less.

[Zr: 0.300% or less]

As are the cases with Nb and V, Zr is also an element that improves the strength and toughness of the weld metal and improves arc stability. However, if the Zr content exceeds 0.300%, a decrease in the toughness of the weld metal will be incurred. Therefore, it is preferred that Zr be added by 0.300% or less.

[K: 0.0150% or less]

K is an element that stabilizes molten droplet transfer even at low currents and has the effect of refining molten droplets themselves in straight polarity MAG welding. In this regard, it is preferred that K be contained in the steel wire, if necessary. However, if K is contained, an amount greater than 0.0150% K will increase the arc length during welding, causing the molten droplets suspended at the tip of the welding wire to become unstable, resulting in many spatters. Therefore, the K content is preferably 0.0150% or less.

[Composition of Balance]

The balance other than the above compositions consists of Fe and inevitable impurities. Examples of inevitable impurities include O (oxygen), Sn, Sb, As, Pb, and Bi. The amount of O (oxygen) contained in the wire is preferably 0.0100% or less. This O (oxygen) is unavoidably mixed into the composition during the production of the welding wire material or during the wire drawing of the welding wire. However, since this O (oxygen) is effective in refining the transfer modes of the molten droplets, a more preferred range thereof is 0.0020 to 0.0080%. Further, it is preferred that the contents of Sn, Sb, and As are each 0.005% or less, and that the contents of Pb and Bi are each 0.001% or less.

As long as the basic composition and optionally selected composition are satisfied, the welding wire of the present invention shall not be prevented from containing inevitable impurity elements other than these compositions, and even such embodiment(s) shall be included within the technical scope of the present invention.

[Method For Producing Welding Wire]

Described hereunder is a preferable method for producing a welding wire of the present invention. After producing a molten steel that has the above composition(s) with a converter, an electric furnace and the like, a steel material (e.g., billet) produced by a continuous casting method is subjected to hot rolling to form a wire material having a diameter of 5.5 to 7.0 mm, followed by cold rolling (e.g., wire drawing) to obtain a steel strand having a diameter of 2.0 to 2.8 mm. Here, there are no particular restrictions on the rolling conditions of hot rolling and cold rolling, as long as the steel wire can be produced with the specified dimensions and shape.

After rolling, the steel wire is sequentially subjected to an annealing step, a pickling step, a Cu plating step, and then a wire drawing step to form a welding wire having a given wire diameter. When producing the welding wire of the present invention, it is preferred that annealing be performed after a potassium (K) salt solution is applied to the surface of the welding wire that has not yet been annealed. As the potassium salt solution, there may be used, for example, a tripotassium citrate aqueous solution, a potassium carbonate aqueous solution, and a potassium hydroxide aqueous solution. The concentration of the potassium salt solution applied to the wire surface is preferably 2 to 30% by mass in terms of potassium content, and the application amount thereof is preferably 30 to 50 g per 1 kg of the steel wire. Potassium has the effect of reducing the generation of spatters; by annealing the welding wire whose surface has been coated with the potassium salt solution, potassium will be stably retained in the internal oxidized layer formed during annealing, whereby spatter generation can be reduced when performing welding.

Next, in the annealing step, this steel wire is softened and subjected to annealing to retain potassium in the internal oxidized layer of the welding wire. A specific annealing condition may, for example, be a $N_2$ atmosphere with a dew point of -2°C or lower ($O_2$: 200 ppm by volume or less, $CO_2$: 0.1% by volume or less). The annealing temperature is preferably 750 to 950°C, where the reaction progress of the internal oxidation is easier to adjust. There, the O (oxygen) content and the K content due to the internal oxidation of the steel wire can be adjusted to given ranges by adjusting the wire diameter of the steel wire, the concentration of the potassium salt solution, the annealing temperature, and the annealing time.

After performing the annealing, the steel wire is pickled and further subjected to Cu plating. This Cu plating can prevent the destabilization of the arc caused by poor power supply during welding. The plating thickness is preferably 0.60 $\mu$m or more. Meanwhile, since the toughness of the weld metal decreases as the Cu content increases, it is preferred that the Cu content including the Cu content in the welding wire be 3.0% or less, and it is preferred that the Cu plating thickness be 0.60 to 1.00 $\mu$m.

Next, a welding wire having a diameter of 0.9 to 1.6 mm is obtained by performing cold wire drawing. A lubricant is then applied to the surface of this welding wire (application amount: 0.4 to 1.7 g per 10 kg of the welding wire) to improve wire feedability, thereby obtaining a welding wire product with the specified diameter.

[MAG-welding Method]

The MAG-welding method is a widely used arc welding method and is a welding method that uses a mixed gas prepared by mixing one or more of Ar, He and $H_2$ with one or both of $CO_2$ and $O_2$ to protect (shield) the arc and molten metal from the nitrogen in the atmosphere. A gas mixing ratio in the shielding gas used in the straight polarity MAG welding of the present invention is preferably such that one or both of $CO_2$ and $O_2$ should be included at a ratio of 5 to 30% by volume, and the balance uses one or more of Ar, He and $H_2$. More preferably, one or both of $CO_2$ and $O_2$ should be included at a ratio of 10 to 20% by volume.

Welding conditions are described below.

The flow rate of the mixed gas which is a shielding gas is 10 to 30 L/min.

Using a direct-current power source, the power source for welding is applied with straight polarity where the wire (welding rod) serves as the negative pole, and the base metal (weldment) serves as the positive pole. When an inverter power supply used in a factory or the like is used, a converter or the like is used to convert the power to direct current before use.

The current is preferably 170 A or higher, more preferably 200 to 350 A. The voltage is preferably 15 V or higher, more preferably 20 to 35 V.

Further, the welding speed is preferably 20 to 70 cm/min.

Here, beveling is performed so that the base metals to be welded form a given groove shape. It is not necessary to particularly limit the shape of the groove formed, examples of which may include the single V groove, single bevel groove, double V groove, and double bevel groove that are usually used in welded steel structures.

Examples

The present invention will be explained below with reference to examples. However, the following examples are only intended to illustrate the present invention in more detail by way of example and are not intended to limit the scope of rights of the present invention.

At first, a wire material with a diameter of 5.5 to 7.0 mm was produced by hot rolling a steel material (billet) produced by continuous casting. Then, the wire material was subjected to cold rolling (wire drawing) to obtain a steel wire with a diameter of 2.0 to 2.8 mm. A tripotassium citrate aqueous solution having a concentration of 2 to 30% by mass was then applied to this steel wire. The application amount was in the range of 30 to 50 g per 1 kg of the steel wire.

Next, the steel wire was annealed under a $N_2$ atmosphere with a dew point of -2°C or lower ($O_2$: 200 ppm by volume or less, $CO_2$: 0.1% by volume or less). The annealing temperature was in the range of 750 to 950°C.

There, the O (oxygen) content and the K content caused by the internal oxidation of the steel wire were adjusted to specified ranges by adjusting the diameter of the steel strand, the concentration of the tripotassium citrate aqueous solution, the annealing temperature, and the annealing time.

After the annealing, the steel wire was subjected to pickling and Cu plating. Cold wire drawing was then performed to obtain a welding wire with a diameter of 0.9 to 1.6 mm. A lubricant was then applied to the surface of this welding wire (application amount: 0.4 to 1.7 g per 10 kg of the welding wire). Table 1 shows the ingredient composition of the resulting welding wire and its Cu plating thickness.

[Table 1]

| No. | Ingredient Composition of Wire [mass%] | | | | | | | | | | | | | | | | | | | Plating Thickness [μm] | Remarks |
|---|---|---|---|---|---|---|---|---|---|---|---|---|---|---|---|---|---|---|---|---|---|
| | C | Si | Mn | P | S | Ti | Al | Cr | Ni | Mo | Ca | REM | B | N | O | K | Nb | V | Zr | | |
| 1 | 0.025 | 0.77 | 1.75 | 0.002 | 0.002 | 0.22 | 0.017 | 0.09 | 0.03 | 0.08 | 0.0002 | 0.034 | 0.0010 | 0.0040 | 0.0038 | 0.0002 | — | — | — | 0.85 | Invention Example |
| 2 | 0.046 | 0.95 | 1.90 | 0.004 | 0.003 | 0.22 | 0.035 | 0.08 | 0.02 | 0.15 | 0.0005 | 0.044 | 0.0019 | 0.0035 | 0.0024 | — | — | — | — | 0.90 | Invention Example |
| 3 | 0.065 | 0.68 | 1.85 | 0.006 | 0.004 | 0.20 | 0.033 | 0.09 | 0.02 | 0.11 | 0.0001 | 0.032 | 0.0020 | 0.0032 | 0.0024 | — | — | — | — | 0.77 | Invention Example |
| 4 | 0.077 | 0.64 | 1.55 | 0.008 | 0.003 | 0.18 | 0.029 | 0.11 | 0.01 | 0.18 | 0.0003 | 0.025 | 0.0024 | 0.0048 | 0.0036 | 0.0004 | 0.002 | — | 0.001 | 0.82 | Invention Example |
| 5 | 0.054 | 0.58 | 1.77 | 0.005 | 0.002 | 0.16 | 0.022 | 0.12 | 0.04 | 0.13 | 0.0003 | 0.035 | 0.0022 | 0.0042 | 0.0028 | 0.0001 | — | 0.001 | — | 0.61 | Invention Example |
| 6 | 0.066 | 0.66 | 1.90 | 0.005 | 0.005 | 0.18 | 0.018 | 0.10 | 0.01 | 0.14 | 0.0007 | 0.025 | 0.0025 | 0.0039 | 0.0033 | — | — | — | — | 0.99 | Invention Example |
| 7 | 0.059 | 0.82 | 1.94 | 0.003 | 0.003 | 0.20 | 0.030 | 0.15 | 0.02 | 0.16 | 0.0004 | 0.031 | 0.0024 | 0.0027 | 0.0030 | 0.0006 | — | — | — | 0.67 | Invention Example |
| 8 | 0.072 | 0.65 | 1.88 | 0.002 | 0.008 | 0.19 | 0.028 | 0.12 | 0.04 | 0.16 | 0.0002 | 0.036 | 0.0020 | 0.0021 | 0.0050 | — | — | — | — | 0.75 | Invention Example |
| 9 | 0.021 | 0.91 | 1.89 | 0.008 | 0.012 | 0.24 | 0.014 | 0.05 | 0.04 | 0.15 | 0.0008 | 0.050 | 0.0006 | 0.0039 | 0.0054 | — | — | — | — | 0.65 | Invention Example |
| 10 | 0.035 | 0.85 | 1.85 | 0.006 | 0.014 | 0.22 | 0.035 | 0.15 | 0.02 | 0.17 | 0.0011 | 0.028 | 0.0015 | 0.0038 | 0.0026 | — | — | — | — | 0.71 | Invention Example |
| 11 | 0.070 | 0.70 | 1.92 | 0.005 | 0.005 | 0.20 | 0.025 | 0.11 | 0.10 | 0.13 | 0.0005 | 0.034 | 0.0017 | 0.0041 | 0.0024 | — | — | — | — | 0.80 | Invention Example |
| 12 | 0.024 | 0.76 | 1.72 | 0.005 | 0.001 | 0.17 | 0.040 | 0.11 | 0.05 | 0.16 | 0.0016 | 0.044 | 0.0020 | 0.0036 | 0.0043 | — | — | — | — | 0.62 | Invention Example |
| 13 | 0.044 | 0.72 | 1.88 | 0.006 | 0.003 | 0.16 | 0.034 | 0.13 | 0.08 | 0.15 | 0.0004 | 0.042 | 0.0025 | 0.0039 | 0.0033 | — | 0.004 | — | — | 0.75 | Invention Example |
| 14 | 0.063 | 0.83 | 1.89 | 0.007 | 0.003 | 0.20 | 0.021 | 0.12 | 0.02 | 0.15 | 0.0002 | 0.030 | 0.0018 | 0.0044 | 0.0029 | — | — | 0.002 | — | 0.65 | Invention Example |
| 15 | 0.056 | 0.77 | 1.97 | 0.008 | 0.009 | 0.17 | 0.022 | 0.19 | 0.01 | 0.12 | 0.0004 | 0.036 | 0.0016 | 0.0022 | 0.0033 | — | — | — | 0.003 | 0.91 | Invention Example |
| 16 | 0.055 | 0.66 | 1.85 | 0.004 | 0.006 | 0.17 | 0.004 | 0.05 | 0.02 | 0.02 | — | 0.003 | <0.0001 | 0.0034 | 0.0051 | — | — | — | — | 0.40 | Comparative Example |
| 17 | 0.042 | 0.80 | 1.55 | 0.006 | 0.003 | 0.20 | 0.005 | 0.11 | 0.02 | 0.03 | — | 0.002 | <0.0001 | 0.0040 | 0.0028 | — | — | — | — | 0.56 | Comparative Example |
| 18 | 0.023 | 1.00 | 1.78 | 0.006 | 0.015 | 0.15 | — | 0.04 | 0.04 | 0.01 | 0.0010 | — | <0.0001 | 0.0045 | 0.0033 | — | — | — | — | 0.66 | Comparative Example |
| 19 | 0.068 | 0.80 | 2.05 | 0.006 | 0.008 | 0.22 | — | 0.08 | 0.01 | 0.02 | — | 0.008 | <0.0001 | 0.0027 | 0.0052 | — | — | — | — | 0.90 | Comparative Example |
| 20 | 0.063 | 1.02 | 1.85 | 0.008 | 0.030 | 0.19 | 0.022 | 0.12 | 0.01 | 0.20 | — | 0.010 | <0.0001 | 0.0044 | 0.0067 | — | — | — | — | 0.80 | Comparative Example |
| 21 | 0.054 | 0.91 | 2.01 | 0.005 | 0.004 | 0.02 | 0.004 | 0.04 | 0.05 | 0.15 | — | — | <0.0001 | 0.0031 | 0.0025 | — | — | — | — | 0.55 | Comparative Example |
| 22 | 0.048 | 0.85 | 1.96 | 0.004 | 0.009 | 0.05 | 0.010 | 0.13 | 0.05 | 0.14 | 0.0020 | 0.002 | <0.0001 | 0.0030 | 0.0038 | — | — | — | — | 0.65 | Comparative Example |

A MAG welding test was conducted using these welding wires to evaluate the spatter generation amount and bead shape.

The welding conditions in the welding test are as follows.

Shielding gas composition: 80% by volume Ar + 20% by volume $CO_2$, Shielding gas flow rate: 20 L/min, Welding power supply: inverter power supply, welding current: 300 A, welding voltage: 32 V, welding polarity: straight polarity, welding speed: 30 cm/min

Next, the evaluation items are outlined as follows.

[Spatter Generation Amount]

Bead-on-plate welding was performed on a steel plate with a thickness of 20 mm to examine the spatter generation amount in such a manner that a collecting jig made of Cu was used to collect spatters with a diameter of 0.5 mm or larger. Here, "Favorable (∘)" was given to examples exhibiting a spatter generation amount of 0.20 g/min or less per 100 g of the deposition amount; "Satisfactory (Δ)" was given to examples exhibiting a spatter generation amount of greater than 0.20 g/min but not greater than 0.30 g/min per 100 g of the deposition amount; "Unsatisfactory (×)" was given to examples exhibiting a spatter generation amount of greater than 0.30 g/min per 100 g of the deposition amount. Here, the welding time was 1 minute.

[Bead Shape]

Bead-on-plate welding was performed on a steel plate with a thickness of 20 mm, and then the cross-sectional surface of the weld bead was observed to measure a bead width W (mm) and a bead height H (mm). As a result, "Favorable (∘)" was given to examples where H/W was 0.5 or less; "Satisfactory (Δ)" was given to examples where H/W was greater than 0.5 but not greater than 0.7; "Unsatisfactory (×)" was given to examples where H/W was greater than 0.7.

These evaluation results are shown in Table 2.

[Table 2]

| No. | Spatter | | Bead | Remarks |
| --- | --- | --- | --- | --- |
| | Generation amount [g/min] | Evaluation | Evaluation | |
| 1 | 0.13 | ○ | ○ | Invention Example |
| 2 | 0.22 | Δ | ○ | Invention Example |
| 3 | 0.20 | ○ | ○ | Invention Example |
| 4 | 0.19 | ○ | ○ | Invention Example |
| 5 | 0.19 | ○ | ○ | Invention Example |
| 6 | 0.18 | ○ | ○ | Invention Example |
| 7 | 0.22 | Δ | ○ | Invention Example |
| 8 | 0.12 | ○ | ○ | Invention Example |
| 9 | 0.12 | ○ | ○ | Invention Example |
| 10 | 0.15 | ○ | ○ | Invention Example |
| 11 | 0.16 | ○ | ○ | Invention Example |
| 12 | 0.20 | ○ | ○ | Invention Example |
| 13 | 0.12 | ○ | ○ | Invention Example |
| 14 | 0.10 | ○ | ○ | Invention Example |
| 15 | 0.16 | ○ | ○ | Invention Example |
| 16 | 0.55 | × | × | Comparative Example |
| 17 | 0.62 | × | × | Comparative Example |
| 18 | 0.44 | × | × | Comparative Example |
| 19 | 0.95 | × | × | Comparative Example |

(continued)

| No. | Spatter | | Bead | Remarks |
|---|---|---|---|---|
| | Generation amount [g/min] | Evaluation | Evaluation | |
| 20 | 0.75 | × | × | Comparative Example |
| 21 | 0.77 | × | × | Comparative Example |
| 22 | 0.60 | × | × | Comparative Example |

In each invention example, a spatter-reducing effect was exerted as indicated by a spatter generation amount that was as small as 0.30 g/min or less, and a bead having a favorable shape was achieved as well. In particular, the spatter-reducing effect and bead shape-improving effect were expressed more significantly by adding REM and containing appropriate amounts (specific amounts) of Ti, Zr, Al, Cr, and Ca. In contrast, in comparative examples where the ingredient composition was outside the range(s) of the present invention, spatters were generated in a large amount (i.e., larger than 0.30 g/min), and deterioration in bead shape was also observed.

The unit "L" of the volume of a gas that is used in this specification means $10^{-3}$ $m^3$ at normal temperature and normal pressure.

## Claims

1. A straight polarity MAG-welding wire for use in straight polarity MAG welding, having an ingredient composition containing, in mass%, C: 0.020 to 0.080%, Si: 0.50 to 0.97%, Mn:1.50 to 2.00%, P: 0.001 to 0.050%, S: 0.001 to 0.025%, Ti: 0.10 to 0.30%, Al: 0.010 to 0.050%, Cr: 0.05 to 0.20%, Ni: 0.01 to 0.10%, Mo: 0.05 to 0.30%, Ca: 0.0016% or less, REM: 0.020 to 0.055%, B: 0.0005 to 0.0030%, N: 0.0100% or less, and a balance consisting of Fe and inevitable impurities.

2. The straight polarity MAG-welding wire according to claim 1, wherein
   the wire further contains at least one selected from, in mass%, Nb: 0.050% or less, V: 0.050% or less, Zr: 0.300% or less, and K: 0.0150% or less, in addition to the ingredient composition.

3. The straight polarity MAG-welding wire according to claim 1 or 2, wherein
   the welding wire has, on a surface layer thereof, a Cu plating with an average thickness of 0.60 $\mu$m or larger.

4. A straight polarity MAG-welding method, in which the straight polarity MAG-welding wire according to any one of claims 1 to 3 is used to perform MAG welding via a shielding gas which is a mixed gas in which one or both of $CO_2$ and $O_2$ are present at 5 to 30% by volume, and a balance is one or more of Ar, He and $H_2$.

**INTERNATIONAL SEARCH REPORT**

| International application No. |
| --- |
| **PCT/JP2023/001744** |

| | | |
| --- | --- | --- |
| **A.** | **CLASSIFICATION OF SUBJECT MATTER** | |

*B23K 35/30*(2006.01)i; *B23K 9/16*(2006.01)i; *B23K 9/173*(2006.01)i
FI:   B23K35/30 320A; B23K9/16 J; B23K9/173 A

According to International Patent Classification (IPC) or to both national classification and IPC

| | | |
| --- | --- | --- |
| **B.** | **FIELDS SEARCHED** | |

Minimum documentation searched (classification system followed by classification symbols)
    B23K35/30; B23K9/16; B23K9/173

Documentation searched other than minimum documentation to the extent that such documents are included in the fields searched
    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| | | |
| --- | --- | --- |
| **C.** | **DOCUMENTS CONSIDERED TO BE RELEVANT** | |

| Category* | Citation of document, with indication, where appropriate, of the relevant passages | Relevant to claim No. |
| --- | --- | --- |
| X | JP 2005-169415 A (JFE STEEL CORP.) 30 June 2005 (2005-06-30) claims, paragraphs [0011], [0051], [0054], table 1 | 1, 2 |
| A | | 3, 4 |
| A | JP 2005-46879 A (JFE STEEL CORP.) 24 February 2005 (2005-02-24) entire text | 1-4 |
| A | JP 2010-125496 A (JFE STEEL CORP.) 10 June 2010 (2010-06-10) entire text | 1-4 |
| A | JP 2004-249353 A (JFE STEEL CORP.) 09 September 2004 (2004-09-09) entire text, all drawings | 1-4 |

☐ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **03 April 2023** | **11 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/001744**

| Patent document cited in search report | | | Publication date (day/month/year) | Patent family member(s) | Publication date (day/month/year) |
|---|---|---|---|---|---|
| JP | 2005-169415 | A | 30 June 2005 | (Family: none) | |
| JP | 2005-46879 | A | 24 February 2005 | (Family: none) | |
| JP | 2010-125496 | A | 10 June 2010 | (Family: none) | |
| JP | 2004-249353 | A | 09 September 2004 | (Family: none) | |

Form PCT/ISA/210 (patent family annex) (January 2015)

**EP 4 464 455 A1**

**Patent documents cited in the description**

- JP 2005246386 A

- JP 2002144081 A